# FASCICULE DE BREVET EUROPEEN

(11) **EP 3 340 565 B1**
(45) Date de publication et mention de la délivrance du brevet: **02.11.2022**
(21) Numéro de dépôt: 17207563.2
(22) Date de dépôt: 15.12.2017
(51) Int. Cl.: H04L 9/40, G01C 23/00, H04W 84/06, H04W 4/40

(54) **ENSEMBLE D'IDENTIFICATION, DE PARTAGE ET DE GESTION DE DONNEES COMPORTANT DES DONNEES CRITIQUES ET DES DONNEES NON CRITIQUES**
EINHEIT ZUM IDENTIFIZIEREN, TEILEN UND VERWALTEN VON DATEN, DIE KRITISCHE UND NICHT-KRITISCHE DATEN UMFASSEN
UNIT FOR THE IDENTIFICATION, SHARING AND MANAGEMENT OF DATA COMPRISING CRITICAL AND NON-CRITICAL DATA

(30) Priorité: 22.12.2016 FR 1601836
(43) Date de publication de la demande: 27.06.2018
(73) Titulaire: Thales, 92400 Courbevoie (FR)
(72) Inventeur: LALUQUE, Laurent, 33700 Merignac (FR); CAPELLE, Bruno, 33700 Merignac (FR); ELLERO, Sébastien, 33700 Merignac (FR); SERVANTIE, Xavier, 33700 Merignac (FR)
(74) Mandataire: Atout PI Laplace

(56) Documents cités:
- EP-A1- 2 975 361
- WO-A1-2015/165838
- FR-A1- 2 917 206
- FR-A1- 2 924 241
- FR-A1- 3 029 619

## Description

Le domaine de l'invention est celui des systèmes ou des ensembles informatiques complexes devant assurer la gestion de données critiques et de données non critiques. L'invention s'applique tout particulièrement au domaine avionique.

On entend par donnée informatique critique une donnée issue d'un système dont la panne ou le mal fonctionnement peut avoir des conséquences dramatiques pour la vie d'êtres humains ou peut entraîner des dégâts matériels importants ou avoir des effets néfastes sur l'environnement. Typiquement, le système avionique de bord d'un aéronef fait partie des systèmes critiques, les conséquences d'un dysfonctionnement d'un tel système pouvant être catastrophiques.

A l'inverse, les données non critiques ne peuvent entraîner de conséquences graves. Les données fournies par les moyens informatiques grand public en font partie. A titre d'exemple, les ordinateurs portables, les tablettes informatiques font partie de cette catégorie. Les réseaux de communication de type « GSM », acronyme de « Global System for Mobile Communication » font partie des systèmes non critiques.

La sécurisation d'un système critique est un élément essentiel du système. Un des moyens de sécuriser un système critique est de limiter ses possibilités de dialogue avec d'autres systèmes et en particulier avec les systèmes non critiques. Ainsi, les systèmes critiques sont souvent appelés « monde fermé » par opposition aux systèmes non critiques appelés « monde ouvert ».

Cette absence de dialogue entre « monde fermé » et « monde ouvert » restreint les possibilités d'utilisation du système critique à ses spécifications initiales. Au fur et à mesure des développements de l'informatique grand public, cette contrainte est de plus en plus sensible dans la mesure où elle restreint les capacités du système critique.

Un dialogue entre « monde ouvert » et « monde fermé » respectant les impératifs de sécurité du monde fermé permettrait de réaliser de nouvelles fonctions à partir des données du monde ouvert. Pour réaliser ce dialogue, des solutions ont été proposées. Ainsi, le brevet US 9141830 intitulé « Avionics gateway interface, systems and methods » décrit une solution de connexion entre un système avionique et une tablette au moyen d'une passerelle informatique. Des informations produites par un appareil non certifié peuvent ainsi être intégrées à un système avionique certifié après vérification par le pilote. Cette méthode est construite pour que la donnée transitant entre le monde ouvert et l'avionique soit la même. Le brevet FR 2936068 intitulé « Procédé et dispositif d'encapsulation d'applications dans un système informatique pour aéronef » décrit un mécanisme de partage d'un système informatique pour exécuter deux applications simultanément sans se perturber mutuellement, mais les deux applications ne peuvent pas collaborer.

Le document FR 3 029 619 A1 divulgue un système de gestion d'échanges de données entre un cœur avionique et une partie monde ouvert.

L'ensemble informatique selon l'invention ne présente pas ces inconvénients. Il offre la possibilité d'utiliser des données issues du monde ouvert pour bâtir, par exemple, de nouvelles fonctions tout en les contrôlant de façon à garder le niveau de sécurité initial du monde fermé. Plus précisément, l'invention a pour objet un ensemble informatique d'identification, de partage et de gestion de données, ledit système informatique comprenant au moins un serveur de données, ledit serveur comportant un logiciel assurant une fonction déterminée, ladite fonction déterminée transformant ou traduisant des données d'entrée en données de sortie, ledit ensemble informatique comportant au moins :
- Un premier système et un second système non critique, le premier système étant un système critique ;
- Une première interface comprenant :
   ▪ Une première interface numérique assurant le contrôle et la transmission bidirectionnelle de données entre le serveur de données et le système critique, le contrôle de chaque donnée consistant à vérifier que la donnée est conforme à une définition prédéterminée, appartient à une liste prédéterminée, comporte un identifiant unique et a la source de son application dans son identifiant ;
   ▪ Une première interface physique assurant la liaison physique entre la première interface numérique et le système critique ;
- Une seconde interface comprenant :
   ▪ Une seconde interface numérique assurant le contrôle et la transmission bidirectionnelle de données entre le serveur de données et le système non critique, le contrôle de chaque donnée consistant à vérifier que la donnée est conforme à une définition prédéterminée, appartient à une liste prédéterminée, comporte un identifiant unique et a la source de son application dans son identifiant ;
   ▪ Une seconde interface physique assurant la liaison physique entre la seconde interface numérique et le second système, la fonction déterminée dudit logiciel consistant à transformer des données d'entrée issues, à la fois, du premier système critique et du second système non critique en nouvelles données de sortie, et à fournir les données de sortie à la première interface et à la seconde interface.

Avantageusement, le système non critique est une tablette informatique et la seconde interface numérique est du type « WEB Service/REST » ou du type « NMEA » et la seconde interface physique est du type « sans fil » ou « Wi-Fi ».

Avantageusement, le système non critique est un serveur informatique de type « FAI » (Fournisseur d'Accès à Internet) et la seconde interface physique est du type GSM.

Avantageusement, la première interface physique assurant la liaison physique entre la première interface numérique et le système critique est du type « Ethernet ».

Avantageusement, l'identifiant des données est de type « URI ».

Avantageusement, le système critique est un système avionique comportant au moins un système de visualisation et une interface homme-machine.

Avantageusement, la donnée issue du système non critique est une donnée géolocalisée ou une zone de terrain géolocalisée.

Avantageusement, la fonction déterminée est une fonction de présentation d'informations ou d'activation de matériel.

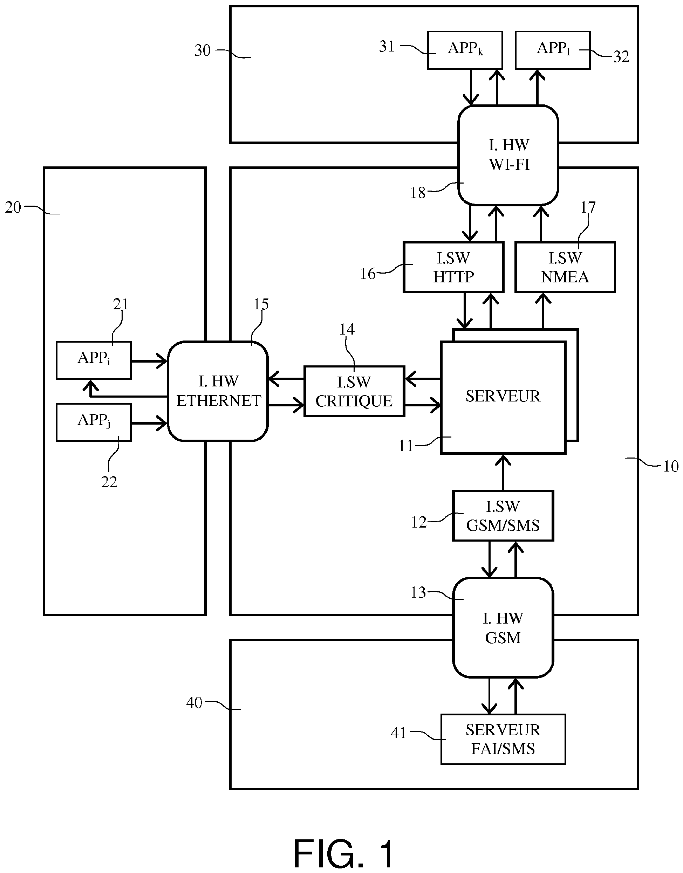

L'invention sera mieux comprise et d'autres avantages apparaîtront à la lecture de la description qui va suivre donnée à titre non limitatif et grâce à la figure 1 annexée qui représente le synoptique d'un ensemble informatique d'identification, de partage et de gestion de données selon l'invention.

L'ensemble informatique selon l'invention met en œuvre au moins deux systèmes reliés par un serveur informatique. Un des deux systèmes est nécessairement un système critique. Le second système est un système non critique. L'invention s'applique tout particulièrement lorsque le second système est un système non critique appartenant au monde ouvert.

A titre d'exemple non limitatif, l'ensemble informatique selon l'invention est représenté sur la figure 1 dans le cas d'un premier système critique et de deux seconds systèmes non critiques.

La configuration représentée comporte un dispositif informatique 10 comprenant essentiellement un serveur informatique central 11 communiquant avec un système critique 20 et deux systèmes non critiques 30 et 40. Bien entendu, l'invention n'est pas limitée à cette seule configuration. Le système peut comporter plusieurs serveurs mettant en communication une pluralité de systèmes critiques avec une pluralité de systèmes non critiques. Le dispositif informatique 10 peut être un calculateur électronique autonome ou un ensemble de cartes électroniques faisant partie d'un système plus important.

Le cœur du système est le serveur informatique 11 qui comporte des logiciels d'application et des données. En fonction de données d'entrée fournies par différentes interfaces, il transforme ou traduit ces données d'entrée en données de sortie et fournit ces données de sortie sur ces mêmes interfaces qui vont être utilisées par des applications notées « APPₓ » sur la figure 1.

Chaque interface entre le serveur et le monde extérieur comporte deux sous-ensembles qui sont une interface numérique et une interface physique. L'interface numérique assure le contrôle et la transmission bidirectionnelle de données entre le serveur de données et le système critique. L'accès d'une donnée en lecture ou lecture/écriture est défini par cette interface numérique. Le contrôle de chaque donnée consiste à vérifier que la donnée est conforme à une définition prédéterminée, appartient à une liste prédéterminée, comporte un identifiant unique et à la source de son application dans son identifiant.

L'interface physique assure la liaison physique entre la première interface numérique et le système critique.

Le fait que les données comportent un identifiant unique interdit à un producteur de données du monde ouvert de modifier les données du monde fermé et réciproquement. L'identifiant des données peut être de type « URI », acronyme de « Uniform Resource Identifier ».

Sur la figure 1, le serveur est connecté à un système critique 20 et deux systèmes non critiques 30 et 40 au moyen des interfaces 12 à 18 détaillées ci-dessous.

A titre de premier exemple, le système critique 20 est un système de type avionique utilisé pour le pilotage et la navigation des aéronefs. Généralement, il comporte au moins un système de visualisation et une interface homme-machine dédiée. Le système de visualisation comporte plusieurs dispositifs de visualisation qui peuvent être de différentes natures. Il peut s'agir de dispositifs de visualisation de planche de bord ou de dispositifs de visualisation dits « Tête haute ».

Dans ce cas, le serveur est relié au système avionique à travers l'interface numérique critique « I. SW » 14 et l'interface physique « I. HW » 15. Cette dernière interface 15 peut être du type « Ethernet ». Dans ce cadre, les identifiants des données peuvent être de type « /avionics/xxx » pour les données destinées au système avionique et de type « /openworld/xxx » pour les données destinées au monde ouvert des systèmes non critiques. Par exemple, l'identifiant « /avionics/pitch » donne l'information de tangage de l'appareil et l'identifiant « /openworld/poi/latitude » donne la latitude d'un point d'intérêt. Cette interface 15 est reliée aux applications 21 « APPᵢ » et 22 « APPⱼ ».

A titre de second exemple, le système non critique 30 est une tablette informatique dite « grand public ». Dans ce cas, l'interface numérique « I. SW » 16 peut être du type « WEB services REST ». Les Services Web de type « REST », acronyme signifiant « REpresentational State Transfer » sont basés sur l'architecture du « web » ou « Toile » et ses standards de base sont le protocole « HTTP », acronyme de « Hyper Text Transfert Protocol » et les identifiants de type « URI ».

L'interface numérique « I. SW » 17 peut être du type « NMEA », acronyme de « National Marine Electronics Association ». La seconde interface physique « I. HW » 18 est du type « sans fil » ou « Wi-Fi » ou de type « Bluetooth ». Sur la figure 1, elle est reliée aux applications 31 « APPₖ » et 32 « APPₗ ».

A titre de troisième exemple, le système non critique 40 comporte un serveur informatique 41 de type « FAI », acronyme de « Fournisseur d'Accès à Internet » appartenant à une infrastructure de type « Telecom » et l'interface physique 13 peut être du type « GSM », acronyme de « Global System for Mobile communications ». Avec cette dernière application, il devient possible de diffuser et de prendre en compte des informations issues de « SMS », acronyme de « Short Message Service » dans tout le système avionique.

Un premier intérêt de l'ensemble informatique d'identification, de partage et de gestion de données selon l'invention est de pouvoir mettre à disposition d'un système critique des données de type « WEB » et vice-versa.

Le second intérêt de ce type d'ensemble est de permettre de mettre en œuvre de nouvelles fonctions qui ne pourraient exister autrement. Ces nouvelles fonctions sont essentiellement des fonctions de présentation d'informations ou d'activation de matériel.

A titre de premier exemple d'application, dans le cas d'un système avionique pour hélicoptère comportant un dispositif de détection de position de la tête du pilote, si le monde « ouvert » met à disposition la direction du phare d'éclairage de l'hélicoptère, il est alors possible de créer une nouvelle application dans laquelle le phare d'éclairage est piloté par la tête du pilote.

A titre de second exemple, si le système avionique comporte un dispositif de détection de position de la tête du pilote couplé à un dispositif de visualisation de casque et si le monde ouvert met à disposition un point d'intérêt géoréférencé, ce point d'intérêt peut apparaître dans le dispositif de visualisation de casque.

A titre de troisième exemple, le système avionique émet une donnée représentant la position géographique de l'aéronef, cette position peut être envoyée à une tablette graphique et la position de l'aéronef peut alors apparaître dans un système de cartographie en ligne.

## Revendications

1. Ensemble informatique d'identification, de partage et de gestion de données, ledit ensemble informatique comprenant au moins un serveur de données (11), ledit serveur comportant un logiciel assurant une fonction déterminée, **caractérisé en ce que** ledit système informatique comporte au moins :
- Un premier système (20) critique et un deuxième système non critique (30, 40),
- Une première interface comprenant :
▪ Une première interface numérique (14) assurant le contrôle et la transmission bidirectionnelle de données entre le serveur de données et le système critique, le contrôle de chaque donnée consistant à vérifier que la donnée est conforme à une définition prédéterminée, appartient à une liste prédéterminée, comporte un identifiant unique et à la source de son application dans son identifiant ;
▪ Une première interface physique (15) assurant la liaison physique entre la première interface numérique et le système critique ;
- Une seconde interface comprenant :
▪ Une seconde interface numérique (12, 16, 17) assurant le contrôle et la transmission bidirectionnelle de données entre le serveur de données et le deuxième système non critique, le contrôle de chaque donnée consistant à vérifier que la donnée est conforme à une définition prédéterminée, appartient à une liste prédéterminée, comporte un identifiant unique et a la source de son application dans son identifiant ;
▪ Une seconde interface physique (13, 18) assurant la liaison physique entre la seconde interface numérique et le second système ;
- La fonction déterminée dudit logiciel consistant à transformer des données d'entrée issues, à la fois, du premier système critique et du second système non critique en nouvelles données de sortie, et à fournir les données de sortie à la première interface et à la deuxième interface.

2. Ensemble informatique selon la revendication 1, **caractérisé en ce que** le système non critique est une tablette informatique et **en ce que** la seconde interface numérique est du type « WEB Service/REST » ou du type « NMEA » et **en ce que** la seconde interface physique est du type « sans fil » ou « Wi-Fi ».

3. Ensemble informatique selon l'une des revendications 1 ou 2, **caractérisé en ce que** le système non critique est un serveur informatique de type Fournisseur d'Accès à Internet et **en ce que** la seconde interface physique est du type GSM.

4. Ensemble informatique selon l'une des revendications précédentes, **caractérisé en ce que** la première interface physique assurant la liaison physique entre la première interface numérique et le système critique est du type « Ethernet ».

5. Ensemble informatique selon l'une des revendications précédentes, **caractérisé en ce que** l'identifiant des données est de type « URI » .

6. Ensemble informatique selon l'une des revendications précédentes, **caractérisé en ce que** le système critique est un système avionique comportant au moins un système de visualisation et une interface homme-machine.

7. Ensemble informatique selon les revendications 1 et 6, **caractérisé en ce que** la donnée issue du système non critique est une donnée géolocalisée ou une zone de terrain géolocalisée.

8. Ensemble informatique selon l'une des revendications précédentes, **caractérisé en ce que** la fonction déterminée est une fonction de présentation d'informations ou d'activation de matériel.

## Patentansprüche

1. Computeranordnung zum Identifizieren, Teilen und Verwalten von Daten, wobei die Computeranordnung mindestens einen Datenserver (11) umfasst, wobei der Datenserver eine Software aufweist, welche eine bestimmte Funktion gewährleistet, wobei die Computeranordnung mindestens Folgendes aufweist:
- ein erstes kritisches System (20) und ein zweites unkritisches System (30, 40),
- eine erste Schnittstelle, Folgendes umfassend:
▪ eine erste digitale Schnittstelle (14), welche die Kontrolle und die bidirektionale Übertragung von Daten zwischen dem Datenserver und dem kritischen System gewährleistet, wobei die Kontrolle eines jeden Datums darin besteht, zu überprüfen, dass das Datum einer vorbestimmten Definition entspricht, zu einer vorbestimmten Liste gehört, eine einzigartige Kennung aufweist und die Quelle seiner Anwendung in seiner Kennung aufweist;
▪ eine erste physische Schnittstelle (15), welche die physische Verbindung zwischen der ersten digitalen Schnittstelle und dem kritischen System gewährleistet;
- eine zweite Schnittstelle, Folgendes umfassend:
▪ eine zweite digitale Schnittstelle (12, 16, 17), welche die Kontrolle und die bidirektionale Übertragung von Daten zwischen dem Datenserver und dem zweiten unkritischen System gewährleistet, wobei die Kontrolle eines jeden Datums darin besteht, zu überprüfen, dass das Datum einer vorbestimmten Definition entspricht, zu einer vorbestimmten Liste gehört, eine einzigartige Kennung aufweist und die Quelle seiner Anwendung in seiner Kennung aufweist;
▪ eine zweite physische Schnittstelle (13, 18), welche die physische Verbindung zwischen der zweiten digitalen Schnittstelle und dem zweiten System gewährleistet;
- wobei die bestimmte Funktion der Software darin besteht, die Eingangsdaten, welche gleichzeitig aus dem ersten kritischen System und dem zweiten unkritischen System stammen, in neue Ausgangsdaten zu verwandeln, und die Ausgangsdaten an die erste Schnittstelle und die zweite Schnittstelle bereitzustellen.

2. Computeranordnung nach Anspruch 1, **dadurch gekennzeichnet, dass** das unkritische System ein Tablet-Computer ist, und dadurch, dass die zweite digitale Schnittstelle eine Schnittstelle vom Typ "WEB Service/REST" oder vom Typ "NMEA" ist und dadurch, dass die zweite physische Schnittstelle eine Schnittstelle vom Typ "drahtlos" oder "Wi-Fi" ist.

3. Computeranordnung nach einem der Ansprüche 1 oder 2, **dadurch gekennzeichnet, dass** das unkritische System ein Computerserver vom Typ Internet Service Provider ist, und dadurch, dass die zweite physische Schnittstelle eine Schnittstelle vom Typ GSM ist.

4. Computeranordnung nach einem der vorhergehenden Ansprüche, **dadurch gekennzeichnet, dass** die erste physische Schnittstelle, welche die physische Verbindung zwischen der ersten digitalen Schnittstelle und dem kritischen System gewährleistet, eine Schnittstelle vom Typ "Ethernet" ist.

5. Computeranordnung nach einem der vorhergehenden Ansprüche, **dadurch gekennzeichnet, dass** die Datenkennung eine Kennung vom Typ "URI" ist.

6. Computeranordnung nach einem der vorhergehenden Ansprüche, **dadurch gekennzeichnet, dass** das kritische System ein Avionik-System ist, welches mindestens ein Anzeigesystem und eine Mensch-Maschine-Schnittstelle aufweist.

7. Computeranordnung nach den Ansprüchen 1 und 6, **dadurch gekennzeichnet, dass** das aus dem unkritischen System stammende Datum ein geolokalisiertes Datum oder ein geolokalisierter Geländebereich ist.

8. Computeranordnung nach einem der vorhergehenden Ansprüche, **dadurch gekennzeichnet, dass** die bestimmte Funktion eine Funktion der Präsentation von Informationen oder der Aktivierung von Hardware ist.

## Claims

1. A computer assembly for identifying, sharing and managing data, said computer system comprising at least one data server (11), said server having software providing a determined function, said computer assembly having at least:
- a first critical system (20) and a second non-critical system (30, 40),
- a first interface comprising:
▪ a first digital interface (14) for monitoring and bidirectionally transmitting data between the data server and the critical system, the monitoring of each datum consisting in verifying that the datum is in accordance with a predetermined definition, belongs to a predetermined list, has a unique identifier and has the source of its application in its identifier;
▪ a first physical interface (15) for physically linking the first digital interface with the critical system;
- a second interface comprising:
▪ a second digital interface (12, 16, 17) for monitoring and bidirectionally transmitting data between the data server and the second non-critical system, the monitoring of each datum consisting in verifying that the datum is in accordance with a predetermined definition, belongs to a predetermined list, has a unique identifier and has the source of its application in its identifier;
▪ a second physical interface (13, 18) for physically linking the second digital interface with the second system;
- the specific function of said software consisting in transforming input data coming from both the first critical system and the second non-critical system into new output data, and in providing the output data to the first interface and to the second interface.

2. The computer assembly according to claim 1, **characterised in that** the non-critical system is a tablet computer and **in that** the second digital interface is a "WEB Service/REST" interface or an "NMEA" interface and **in that** the second physical interface is a "wireless" or "Wi-Fi" interface.

3. The computer assembly according to either of claims 1 or 2, **characterised in that** the non-critical system is an Internet service provider computer server and **in that** the second physical interface is a GSM interface.

4. The computer assembly according to one of the preceding claims, **characterised in that** the first physical interface for physically linking the first digital interface and the critical system is an Ethernet interface.

5. The computer assembly according to one of the preceding claims, **characterised in that** the identifier of the data is a URI.

6. The computer assembly according to one of the preceding claims, **characterised in that** the critical system is an avionics system having at least one viewing system and a human-machine interface.

7. The computer assembly according to Claims 1 and 6, **characterised in that** the datum arising from the non-critical system is a geolocated datum or a geolocated terrain area.

8. The computer assembly according to one of the preceding claims, **characterised in that** the determined function is an information presentation function or a hardware activation function.
